# FASCICULE DE BREVET EUROPEEN

(11) **EP 3 389 454 B1**
(45) Date de publication et mention de la délivrance du brevet: **17.04.2024**
(21) Numéro de dépôt: 16825845.7
(22) Date de dépôt: 14.12.2016
(51) Int. Cl.: H04W 4/80

(54) **ENSEMBLE D'INTERFACE ET DE COMMANDE**
SCHNITTSTELLE UND STEUEREINHEIT
INTERFACE AND CONTROL UNIT

(30) Priorité: 16.12.2015 FR 1562472
(43) Date de publication de la demande: 24.10.2018
(73) Titulaire: SEB S.A., 69130 Ecully (FR)
(72) Inventeur: BEAUDET, Jean-Yves, 53110 Saint-julien-du-terroux (FR); BLOND, Laurent, 21200 Beaune (FR); DURAND, Lionnel, 50810 Saint-pierre-de-semilly (FR)
(74) Mandataire: Germain Maureau
(86) Numéro de dépôt international: PCT/FR2016/053425
(87) Numéro de publication internationale: WO 2017/103476

(56) Documents cités:
- EP-A1- 1 561 409
- EP-A1- 2 921 091
- WO-A2-2006/092775
- WO-A2-2014/111204

## Description

La présente invention concerne un ensemble d'interface et de commande pour appareil de préparation culinaire. Un tel ensemble d'interface et de commande est intégré dans un boitier de l'appareil de préparation culinaire et comprend un circuit de commande. Un tel ensemble est connu de WO 2014/111204.

L'ensemble d'interface et de commande donne satisfaction dans le sens où il est possible de le remplacer par un autre dans le cadre du service après vente. Ainsi si un problème de fonctionnement est dû à la partie contrôle de l'appareil de préparation culinaire, la partie mécanique, qui est en général encore en bon état, peut être conservée.

Toutefois, il n'est pas toujours possible d'équiper l'appareil de préparation culinaire avec la dernière version disponible de l'ensemble d'interface et de commande, cette dernière version possédant plus de fonctions de commande.

En effet, le boitier dans lequel doit être installé l'ensemble d'interface et de commande impose une limite de taille et de forme pour l'ensemble d'interface et de commande. Dans ce cadre, la conception de nouvelles versions de l'ensemble d'interface et de commande est contrainte par le manque de place. En particulier il est difficile d'inclure de nouveaux éléments de contrôle et/ou de commande.

La présente invention vise à résoudre tout ou partie des inconvénients mentionnés ci-dessus.

A ce titre, l'invention concerne un ensemble d'interface et de commande pour appareil de préparation culinaire selon la revendication 1.

L'ensemble d'interface et de commande est facile à manipuler car tous ses éléments sont solidaires. Il est ainsi possible de changer l'ensemble d'interface et de commande d'un appareil de préparation culinaire de manière aisée.

Cette disposition est intéressante car il est possible de faire évoluer l'appareil de préparation culinaire en conservant la partie mécanique et le circuit de puissance de l'appareil de préparation culinaire.

La présence d'un circuit de communication est également avantageuse. Les contraintes de géométrie que doit respecter l'ensemble d'interface et de commande ne sont ainsi plus une limite au développement de fonctionnalités de commande et/ou de contrôle.

En effet, la partie commande de l'appareil de préparation culinaire peut ainsi être déportée vers un terminal distant, ce qui permet de gagner de la place dans le boitier.

Selon un aspect de l'invention, le circuit de commande comprend en outre une prise adaptée pour être branchée à un circuit de puissance de l'appareil de préparation culinaire ou à un élément de liaison audit circuit de puissance.

Cette disposition permet de conserver la partie puissance dans le bâti de l'appareil de préparation culinaire. Ainsi lors du changement de l'ensemble d'interface et de commande, l'appareil de préparation culinaire conserve ses éléments fonctionnels et la partie puissance qui alimente ces éléments fonctionnels en énergie électrique.

La présente invention concerne également un ensemble d'interface et de commande pour appareil de préparation culinaire comprenant :
- un circuit de commande comprenant une prise adaptée pour être branchée à un circuit de puissance de l'appareil de préparation culinaire ou à un élément de liaison audit circuit de puissance, le circuit de commande étant agencé pour émettre un signal de commande d'au moins un élément fonctionnel de l'appareil de préparation culinaire,
- un circuit de communication agencé pour échanger des informations avec un terminal distantselon un protocole de communication connu, par exemple un protocole de communication bidirectionnel par ondes radio, le circuit de communication étant en outre apte à échanger des informations avec le circuit de commande,
- un support sur lequel sont rapportés ou dans lequel sont ménagés le circuit de commande et le circuit de communication, le support comprenant des fixations à un bâti de l'appareil de préparation culinaire.

Selon un aspect de l'invention, l'ensemble d'interface et de commande comprend en outre un panneau de commande rapporté sur ou ménagé dans le support, le panneau de commande étant agencé pour échanger des informations avec le circuit de commande.

Cette disposition permet de faire évoluer les commandes de l'appareil de préparation culinaire. Les commandes peuvent également évoluer avec chaque nouvelle version de l'ensemble d'interface et de commande.

Selon un aspect de l'invention, le panneau de commande comprend une interface utilisateur. De préférence, l'interface utilisateur comprend un ensemble de boutons, un détecteur de mouvement et/ou un dispositif d'acquisition sonore.

Selon un aspect de l'invention, l'interface utilisateur comprend un dispositif d'avertissement. En particulier, le dispositif d'avertissement comprend un écran d'affichage, un dispositif d'avertissement sonore et/ou un voyant lumineux.

Selon un aspect de l'invention, l'ensemble d'interface et de commande comprend en outre un accéléromètre rapporté sur ou ménagé dans le support. Cette disposition permet de détecter le déplacement de l'appareil de préparation culinaire lors de son fonctionnement.

Il est ainsi possible d'arrêter le fonctionnement de l'entraineur rotatif lorsqu'un déplacement est détecté de manière à éviter par exemple la chute de l'appareil d'une table. En effet, le déplacement peut être engendré par un balourd dû à l'élément rotatif en fonctionnement.

La présente invention concerne également un appareil de préparation culinaire comprenant un ensemble d'interface et de commande tel que décrit ci-dessus.

La présente invention concerne en outre un procédé de remplacement d'un ensemble d'interface et de commande d'un appareil de préparation culinaire comprenant les étapes suivantes :
- retirer un premier ensemble d'interface et de commande d'un bâti de l'appareil de préparation culinaire,
   ledit premier ensemble d'interface et de commande comprenant un circuit de commande pourvu d'une prise adaptée pour être branchée à un circuit de puissance de l'appareil de préparation culinaire ou à un élément de liaison audit circuit de puissance, le circuit de commande étant agencé pour émettre un signal de commande d'au moins un élément fonctionnel de l'appareil de préparation culinaire,
   ledit premier ensemble d'interface et de commande comprenant en outre un support sur lequel sont rapportés ou dans lequel est ménagé le circuit de commande, le support comprenant des fixations à un bâti de l'appareil de préparation culinaire,
   ledit premier ensemble d'interface et de commande étant dépourvu de circuit de communication,
- monter un deuxième ensemble d'interface et de commande tel que décrit ci-avant dans ledit bâti de l'appareil de préparation culinaire,
   ledit deuxième ensemble d'interface et de commande comprenant un circuit de commande, un support et un circuit de communication agencé pour échanger des informations avec un terminal distant selon un protocole de communication connu, par exemple un protocole de communication bidirectionnel par ondes radio, le circuit de communication étant en outre apte à échanger des informations avec le circuit de commande.

Cette disposition permet de réaliser le remplacement du premier ensemble d'interface et de commande par un deuxième ensemble d'interface et de commande comprenant un circuit de communication.

L'encombrement du premier ensemble est comparable à l'encombrement du deuxième ensemble car seul le circuit de communication a été ajouté.

Il est donc possible de conserver l'ensemble de l'appareil de préparation culinaire à l'exception de son ensemble d'interface et de commande, c'est-à-dire la partie mécanique qui ne subit pas d'évolution majeure.

Au contraire, l'ensemble d'interface et de commande est susceptible d'évoluer, par exemple en permettant à l'utilisateur un choix plus important de recettes. Le circuit de communication permet donc de connecter l'ensemble d'interface et de commande à un terminal lui fournissant plus de recettes, c'est-à-dire un ensemble d'instructions pour la commande d'éléments fonctionnels de l'appareil de préparation culinaire.

Selon un aspect de l'invention, l'étape de retrait du premier ensemble d'interface et de commande du bâti de l'appareil de préparation culinaire correspond à une étape de détachement des fixations au bâti de l'appareil de préparation culinaire, et/ou l'étape de montage du deuxième ensemble d'interface et de commande correspond à une étape de mise en place de fixations au bâti de l'appareil de préparation culinaire.

Il apparait donc que le démontage du premier ensemble et le montage du deuxième ensemble sont faciles à mettre en oeuvre. En effet, le fait de disposer d'un seul support sur lequel sont ménagés les éléments de l'ensemble d'interface et de commande permet un remplacement rapide.

La présente invention concerne également un procédé de commande d'un appareil de préparation culinaire.

Il est connu d'utiliser un appareil de préparation culinaire comprenant au moins un élément fonctionnel apte à exécuter une tâche particulière.

Un élément fonctionnel peut par exemple être un entraineur rotatif agencé pour mélanger au moins un ingrédient dans un récipient de travail de l'appareil de préparation culinaire ou un élément chauffant d'au moins un aliment disposé dans ledit récipient de travail.

Il est également connu d'utiliser un appareil de préparation culinaire disposant d'une entité de commande apte à contrôler l'exécution de ladite tâche et éventuellement apte à interrompre ladite tâche pour la reprendre ensuite si une condition de sécurité n'est pas respectée. Il peut s'agir par exemple de l'ouverture d'un couvercle de fermeture lors de l'exécution d'une tâche par l'appareil de préparation culinaire.

Il est également connu de commander à distance un appareil de préparation culinaire pour le lancement de ladite tâche.

Cette commande à distance est avantageuse car il est permis de déporter une partie de la mémoire et des éléments de commande de l'appareil de préparation culinaire dans un autre élément distant, par exemple un terminal.

Toutefois déporter les commandes de l'appareil de préparation culinaire à un élément distant a pour conséquence de permettre un démarrage de l'appareil de préparation culinaire à distance.

Ainsi l'utilisateur peut se trouver à distance de l'appareil de préparation culinaire et ne pas le voir bien que le terminal soit apte à lancer une tâche à distance.

Le démarrage de l'appareil de préparation culinaire alors que l'utilisateur peut être dans une autre pièce peut poser des problèmes de sécurité d'utilisation, notamment en fonction de la configuration du voisinage de l'appareil. Un problème de sécurité d'utilisation peut aussi résulter du lancement involontaire d'une tâche.

La présente invention vise à résoudre tout ou partie des inconvénients mentionnés ci-dessus.

A cet effet, la présente invention concerne un procédé de commande interne d'un appareil de préparation culinaire comprenant une entité de commande agencée pour recevoir des informations de commande selon un protocole de communication et au moins un élément fonctionnel apte à être commandé par l'entité de commande et apte à réaliser une tâche, le procédé de commande interne de l'appareil de préparation culinaire comprenant les étapes suivantes :
- réception d'une information de commande comprenant une instruction de commande relative à au moins un élément fonctionnel déterminé par l'entité de commande,
- génération d'une information d'état par l'entité de commande, l'information d'état étant relative à l'aptitude de l'au moins un élément fonctionnel déterminé à exécuter ladite instruction de commande,
- transmission de l'information d'état par l'entité de commande à un dispositif d'avertissement de l'appareil de préparation culinaire, le dispositif d'avertissement étant apte à émettre un signal relatif à ladite information d'état,
- réception d'une instruction confirmative de commande par l'entité de commande en provenance d'une interface utilisateur de l'appareil de préparation culinaire,
- déclenchement de l'exécution d'une tâche déterminée par l'au moins un élément fonctionnel déterminé correspondant à l'instruction de commande.

L'information de commande détermine la tâche qui est ensuite exécutée par l'au moins un élément fonctionnel correspondant. L'appareil de préparation culinaire est agencé pour recevoir cette information de commande et l'exécuter.

Ainsi, lorsque l'information de commande provient d'un système distant, la tâche ne s'exécute pas directement suite à l'envoi de l'information de commande à l'appareil de préparation culinaire : une validation par l'intermédiaire de l'interface utilisateur est nécessaire.

Cette disposition permet donc de sécuriser l'utilisation de l'appareil de préparation culinaire car la tâche n'est exécutée qu'après transmission de l'instruction de commande et ensuite de l'instruction confirmative de commande.

Par exemple, lorsque l'information de commande est envoyée par erreur, la tâche n'est pas exécutée et il n'est pas nécessaire de se précipiter sur l'appareil de préparation culinaire pour stopper son exécution.

Selon un autre exemple, lorsque l'information de commande est correctement envoyée mais que l'appareil de préparation culinaire se trouve hors de vue de l'utilisateur, l'exécution de la tâche peut présenter des risques.

Les risques peuvent être par exemple dus à des enfants à proximité de l'appareil de préparation culinaire pouvant être tentés de le en le voyant exécuter la tâche.

Egalement les risques peuvent être dus à d'autres dispositifs disposés à proximité de l'appareil de préparation culinaires et qui pourraient gêner le fonctionnent de l'appareil de préparation culinaire durant l'exécution de la tâche.

Selon un aspect de l'invention, le protocole de communication est un protocole de communication à distance sans contact, de préférence bidirectionnel, par exemple selon un standard de communication permettant un échange bidirectionnel de données par ondes radio.

Selon un aspect de l'invention, le procédé de commande interne de l'appareil de préparation culinaire comprend suite à l'étape de transmission de l'information d'état par l'entité de commande au dispositif d'avertissement, une étape d'émission du signal relatif à ladite information d'état par le dispositif d'avertissement, ledit signal étant un signal physique perceptible par l'utilisateur.

L'utilisateur est donc prévenu de la disposition de l'appareil de préparation culinaire à exécuter une tâche lorsqu'il est à proximité du dispositif d'avertissement.

Selon un aspect de l'invention, le dispositif d'avertissement est ménagé dans ou disposé sur un boitier de l'appareil de préparation culinaire.

Ainsi l'utilisateur se doit d'être à proximité de l'appareil de préparation culinaire pour constater de lui-même que l'appareil est prêt au lancement de la tâche et que cette tâche peut être lancée en toute sécurité.

Selon un aspect de l'invention, le signal physique perceptible par l'utilisateur correspond à un signal sonore et/ou un signal visuel et/ou un signal perceptible par le toucher.

De préférence, le dispositif d'avertissement comprend un haut-parleur et/ou un élément lumineux et/ou un bouton, en particulier un bouton apte à être déplacé entre une position de d'avertissement et une position de non-avertissement.

Selon un aspect de l'invention, l'étape de réception d'une instruction confirmative de commande par l'entité de commande est précédée par une étape d'acquisition de l'instruction confirmative de commande par l'interface utilisateur, ladite acquisition consistant à acquérir une saisie d'un utilisateur.

Selon un aspect de l'invention, l'interface utilisateur est disposée sur ou ménagée dans le boitier de l'appareil de préparation culinaire.

Ainsi, l'utilisateur se doit d'être à proximité immédiate de l'appareil de préparation culinaire pour lancer l'exécution de la tâche déterminée en procédant à une saisie au niveau de l'interface utilisateur.

Cette disposition participe donc à la sécurité d'utilisation de l'appareil de préparation culinaire car l'utilisateur peut s'assurer de lui-même que l'appareil de préparation culinaire est dans les dispositions optimales pour que la tâche déterminée soit lancée.

Par disposition optimale, on entend par exemple le fait qu'aucun élément perturbateur externe à l'appareil de préparation culinaire ne risque pas d'interrompre le cours de l'exécution de la tâche déterminée une fois lancée.

Selon un aspect de l'invention, la saisie de l'utilisateur correspond à une saisie apte à être détectée par l'interface utilisateur sous forme de détection de mouvement et/ou de détection sonore - de préférence relative à un son particulier ou une parole déterminée - et/ou de détection d'appui sur une portion déterminée de l'interface utilisateur.

Selon un aspect de l'invention, l'interface utilisateur comprend une unité de saisie pourvue d'un détecteur de mouvement et/ou d'un détecteur sonore et/ou d'un détecteur de contact par un utilisateur.

En particulier le détecteur de contact est ménagé dans un bouton apte à être enclenché par l'utilisateur.

Selon un aspect de l'invention, le dispositif d'avertissement est ménagé dans ou disposé sur l'interface utilisateur ou est apte à émettre un signal par l'intermédiaire de l'interface utilisateur.

Ainsi l'avertissement de l'utilisateur lui signalant que l'appareil de préparation culinaire est prêt et le déclenchement de la tâche déterminée peuvent être effectués tous les deux à partir de l'interface utilisateur.

Selon un aspect de l'invention, le dispositif d'avertissement et l'interface utilisateur sont au moins en partie ménagés dans un bouton apte à être sollicité par l'utilisateur.

Selon un aspect de l'invention, l'étape de réception d'une information de commande par l'entité de commande, est suivie par une étape de configuration réalisée par l'entité de commande et consistant à vérifier l'aptitude de et/ou à agencer l'au moins un élément fonctionnel pour l'exécution de la tâche déterminée.

L'étape de configuration correspond à une mise en place ou agencement particulier de l'appareil de préparation culinaire pour l'exécution de la tâche déterminée à venir.

L'étape de configuration n'est donc pas automatiquement suivie du lancement de l'exécution de la tâche déterminée : une instruction confirmative de commande est nécessaire.

Selon un aspect de l'invention, la vérification de l'aptitude de l'au moins un élément fonctionnel à l'exécution de la tâche déterminée correspond à la réalisation d'un contrôle de paramètres par l'entité de commande relatif à l'aptitude dudit au moins un élément fonctionnel à réaliser la tâche déterminer.

De préférence, au moins une partie de des paramètres destinés à être contrôlés sont obtenus par des mesures de capteurs aptes à communiquer avec l'entité de commande, tel que des capteurs de poids, des capteurs de position, ou des capteurs de contrôle de grandeurs physiques telles qu'une tension ou une intensité. Lesdits capteurs sont compris dans l'appareil de préparation culinaire.

Selon un aspect de l'invention, l'agencement de l'au moins un élément fonctionnel pour l'exécution de la tâche déterminée correspond au moins en partie à la mise en place ou disposition d'au moins un élément fonctionnel en une configuration adéquate pour le commencement de la tâche déterminée à accomplir.

Selon un aspect de l'invention, l'instruction de commande est apte à être interprétée par l'entité de commande et comprend notamment une référence interprétable par l'entité de commande comme étant relative à une tâche déterminée.

Ainsi l'instruction de commande peut être une information succincte faisant référence de manière concise à la tâche déterminée. En effet la tâche déterminée peut être complexe et impliquer plusieurs éléments fonctionnels sollicités en même temps ou à tour de rôle selon un schéma précis. Ce schéma peut être compris en mémoire de l'entité de commande.

De manière alternative et selon un autre aspect de l'invention, l'instruction de commande comprend un schéma de fonctionnement relatif à la durée et aux conditions de fonctionnement de l'au moins un élément fonctionnel impliqué dans la réalisation la tâche déterminée.

Ainsi, il est possible de faire exécuter une tâche à l'appareil de préparation culinaire qui n'est pas connue de la mémoire de l'entité de commande. Cette disposition est intéressante car elle permet par exemple de réaliser des tâches particulières de recettes de cuisines qui n'étaient pas connues au moment de la réalisation de l'entité de commande ou qui ont délibérément été considérées comme ne devant pas être enregistrées en mémoire de l'appareil de préparation culinaire.

De manière alternative également, l'instruction de commande peut comprendre une suite de paramètres définissant la tâche à accomplir, les paramètres correspondant par exemple à une durée de cuisson ou un temps de cuisson.

Selon un aspect de l'invention, l'étape de déclenchement de l'exécution d'une tâche déterminée, est suivie par une étape d'exécution de la tâche déterminée par l'au moins un élément fonctionnel déterminé correspondant à l'instruction de commande, la tâche déterminée correspondant à l'exécution par l'au moins un élément fonctionnel déterminé d'au moins une opération élémentaire selon un temps de fonctionnement déterminée et/ou selon une puissance déterminée et/ou selon un réglage déterminé par ledit au moins un élément fonctionnel déterminé.

Après validation de l'utilisateur par l'envoi de l'instruction confirmative de commande, l'appareil de préparation culinaire est apte à exécuter la tâche déterminée dans sa totalité sans qu'il soit nécessaire de lui envoyer d'autres instructions de commande.

Ainsi l'appareil de préparation culinaire est apte à recevoir une instruction de commande, à la stocker en mémoire, puis exécuter la tâche correspondante sans que l'appareil de préparation soit commandé à distance pendant l'exécution de la tâche.

Pendant l'exécution de la tâche déterminée l'appareil de préparation culinaire est maître, c'est-à-dire qu'il contrôle l'exécution de la tâche.

Selon un aspect de l'invention, l'opération élémentaire correspond à une étape de préparation culinaire d'au moins un aliment disposé dans au moins un récipient de travail de l'appareil de préparation culinaire.

La tâche déterminée est réalisée dans un récipient de travail dédié de l'appareil de préparation culinaire. Selon un aspect de l'invention, la tâche déterminée correspond à une étape d'une recette de cuisine.

Selon un aspect de l'invention, l'entité de commande est apte à réaliser l'interruption et/ou la reprise de ladite tâche déterminée durant l'étape d'exécution de la tâche déterminée.

Ainsi l'entité de commande peut interrompre l'exécution d'une tâche par exemple lorsqu'un contrôle de sécurité réalisé par l'entité de commande sur le fonctionnement de l'appareil de préparation culinaire révèle un dysfonctionnement.

Selon un aspect de l'invention, un contrôle de sécurité peut être effectué par un capteur de l'appareil de préparation culinaire dans le but de vérifier si une disposition d'un élément de l'appareil est correcte pour assurer un fonctionnement sécurisé.

Selon un exemple, un capteur peut être apte à vérifier qu'un couvercle de fermeture d'un récipient de travail est bien fermé lors de l'exécution d'une tâche dans ledit récipient de travail.

Lorsque les contrôles de sécurité correspondent à une disposition normale des éléments de l'appareil de préparation culinaire la tâche peut être exécutée depuis le début ou alors reprendre son exécution à l'état d'avancement atteint lorsque la tâche a été interrompue.

Selon un aspect de l'invention, l'entité de commande est apte, durant l'étape d'exécution de ladite tâche déterminée, à vérifier l'aptitude ou la bonne configuration de l'au moins un élément fonctionnel à l'exécution de la tâche déterminée.

Selon un aspect de l'invention, la vérification de l'aptitude de l'au moins un élément fonctionnel à l'exécution de la tâche déterminée correspond à la vérification effectuée pendant l'étape de configuration.

Selon un aspect de l'invention, le procédé de commande interne d'un appareil de préparation culinaire comprend une étape d'émission d'une information de contrôle par l'entité de commande correspondant à une requête de contrôle reçue par l'entité de commande et concernant l'avancement de l'exécution de la tâche déterminée et/ou concernant une anomalie de fonctionnement de l'appareil de préparation culinaire et/ou une conformité de fonctionnement de l'appareil de préparation culinaire.

Selon un aspect de l'invention, une information de commande en provenance du terminal peut comprendre une requête de contrôle. En particulier ladite requête de contrôle correspond à une interrogation de l'entité de commande sur la bonne réception de ladite information de commande.

De préférence, l'information de contrôle est émise selon le protocole de communication.

Ainsi, après réception de l'information de commande, l'appareil de préparation culinaire connait grâce à l'instruction de commande la tâche qu'il doit exécuter et informe de l'avancement de l'exécution de la tâche.

Cette information de contrôle peut par exemple correspondre à un avancement de l'exécution nul lorsque l'exécution de la tâche n'est pas déclenchée.

La présente invention concerne également un appareil de préparation culinaire agencé pour exécuter les étapes du procédé de commande interne tel que décrit précédemment.

Selon un aspect de l'invention, l'appareil de préparation culinaire comprend une entité de commande agencée pour recevoir des informations de commande selon un protocole de communication, au moins un élément fonctionnel apte à être commandé par l'entité de commande et apte à réaliser une tâche, un dispositif d'avertissement étant apte à émettre un signal et une interface utilisateur apte à réaliser d'acquisition de l'instruction confirmative de commande.

La présente invention concerne en outre un procédé de commande d'un appareil de préparation culinaire par un terminal, le terminal étant agencé pour envoyer des informations de commande selon un protocole de communication audit appareil de préparation culinaire, le procédé comprenant les étapes suivantes :
- sélection d'une tâche déterminée destinée à être accomplie par au moins un élément fonctionnel déterminé de l'appareil de préparation culinaire,
- envoi d'une information de commande à destination de l'appareil de préparation culinaire, l'information de commande comprenant une instruction de commande relative à ladite tâche à exécuter.

Ainsi un utilisateur peut choisir une tâche déterminée destinée à être accomplie par un appareil de préparation culinaire distant et commander cet appareil en vue de l'exécution de cette tâche.

Selon un aspect de l'invention, le procédé de commande d'un appareil de préparation culinaire comprend en outre une étape de réception d'une information de contrôle relative à l'avancement de l'exécution de la tâche déterminée en provenance de l'appareil de préparation culinaire.

L'appareil de préparation culinaire commande et contrôle l'exécution de la tâche déterminée. Il est également apte à envoyer une information de contrôle à destination du terminal pour informer ce dernier de l'état d'avancement de l'exécution de la tâche déterminée.

Selon un aspect de l'invention, l'étape de réception d'une information de contrôle est précédée par une étape d'envoi d'une requête de contrôle correspondante par le terminal à destination de l'appareil de préparation culinaire.

De préférence, la requête de contrôle est comprise dans une information de commande, en particulier l'information de commande comprenant en outre une instruction de commande relative à au moins un élément fonctionnel déterminé par l'entité de commande.

Ainsi la requête de contrôle peut être envoyée à tout moment par le terminal et correspond à une mise à jour du statut de l'appareil de préparation culinaire. Il est ainsi possible pour un utilisateur de connaitre à distance par l'intermédiaire du terminal des informations de contrôle relatives à l'état de l'appareil de préparation culinaire.

La requête de contrôle peut également être comprise dans une information de commande envoyée à l'appareil de préparation culinaire. Ainsi tout en envoyant une consigne à l'appareil de préparation culinaire pour la réalisation d'une tâche déterminée, il est possible de se renseigner sur l'état de l'appareil de préparation culinaire. Par exemple il est possible de recevoir une information de contrôle comme quoi le couvercle de fermeture de l'appareil de préparation culinaire est ouvert.

Selon un aspect de l'invention, le terminal est agencé pour recevoir des informations en provenance d'une base de données comprenant une pluralité de tâches destinées à être exécutée par l'appareil de préparation culinaire.

Selon un aspect de l'invention, la base de données est comprise dans un serveur distant du terminal. De préférence le terminal est agencé pour envoyer une requête en récupération d'au moins une information de commande à destination d'un système de gestion de la base de données.

La présente invention concerne également un produit programme d'ordinateur comprenant des instructions de code agencées pour mettre en oeuvre les étapes d'un procédé de commande d'un appareil de préparation culinaire tel que décrit ci-avant, lorsque ledit programme est exécuté sur un processeur d'un terminal.

Selon un aspect de l'invention, le produit programme d'ordinateur est agencé sous forme d'application téléchargeable sur un terminal lorsque ledit programme est exécuté sur un processeur dudit terminal.

La présente invention concerne en outre un terminal comprenant en mémoire les instructions de code d'un produit programme d'ordinateur tel que décrit ci-avant, le terminal comprenant un processeur agencé pour exécuter un tel produit programme d'ordinateur.

De toute façon l'invention sera bien comprise à l'aide de la description qui suit en référence aux dessins schématiques annexés représentant, à titre d'exemple non limitatif, une forme d'exécution de ce procédé de commande, ce terminal et cet appareil de préparation culinaire
Figure 1 est une vue éclatée d'un appareil de préparation culinaire et d'un terminal.
Figure 2 est une vue en perspective de l'appareil de préparation culinaire.
Figure 3 est une vue de face d'une partie d'un boitier de l'appareil de préparation culinaire.
Figure 4 est un schéma d'un panneau de commande et d'une entité de commande de l'appareil de préparation culinaire.
Figure 5 est un schéma représentant les étapes d'un procédé de commande de l'appareil de préparation culinaire.
Figure 6 est un schéma représentant les étapes d'un procédé de remplacement d'un ensemble d'interface et de commande.

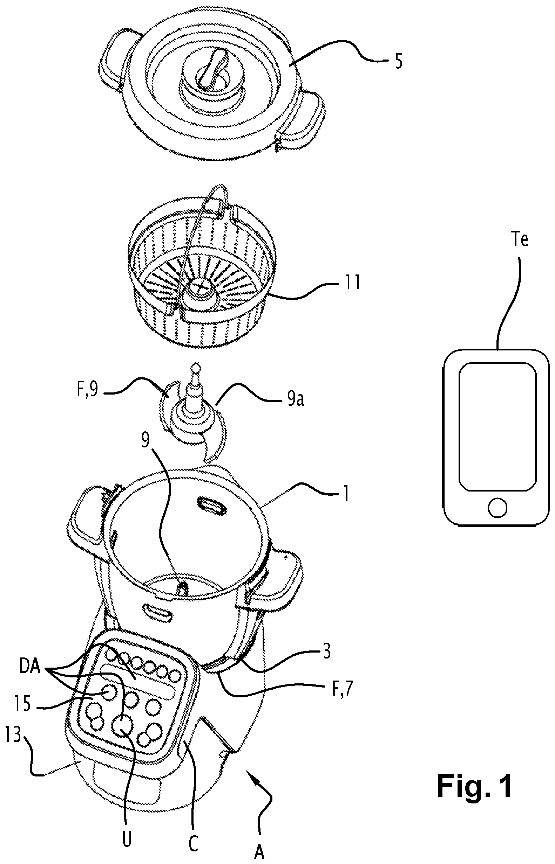

Comme illustré à la figure 1, un appareil de préparation culinaire A comprend un récipient de travail 1 qui est amovible. Ce récipient de travail 1 comprend un fond 3 et un couvercle de fermeture 5.

L'appareil de préparation culinaire A comprend des éléments fonctionnels F par exemple une plaque chauffante 7 agencée pour chauffer le fond du récipient 1 et un entraineur rotatif 9 agencé pour hacher et/ou agiter au moins un aliment disposé dans le récipient 1.

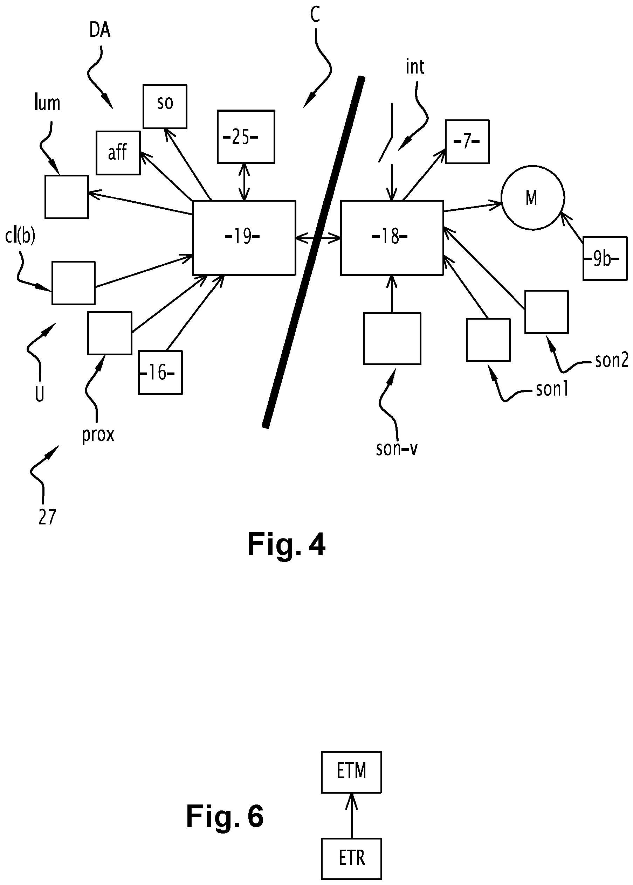

Comme illustré à la figure 4, l'entraineur rotatif 9 comprend un moteur M, une sonde de mesure de température dans le moteur 9a et élément 9a de hachage et/ ou d'agitation.

L'appareil de préparation culinaire A peut également comprendre un panier 11 agencé pour coopérer avec la partie supérieure du récipient de travail 1 et pour recevoir certains aliments, par exemple destinés à la cuisson à la vapeur.

L'appareil de préparation culinaire A comprend en outre un boitier 13 pourvu d'un panneau de commande 15 et d'une entité de commande C.

Le panneau de commande 15 comprend une interface utilisateur U agencée pour acquérir une saisie effectuée par un utilisateur. Pour ce faire l'interface utilisateur U comprend un clavier cl pourvu de boutons b. L'interface utilisateur U peut également comprendre un détecteur de mouvement ou détecteur de proximité prox agencé pour détecter une commande utilisateur correspondant à un mouvement de l'utilisateur.

De manière optionnelle, le panneau de commande 15 peut en outre comprendre un accéléromètre 16 agencé pour détecter le déplacement de l'appareil de préparation culinaire A.

Cette disposition est particulièrement intéressante pour réduire les risques de chute de l'appareil de préparation culinaire A. Ainsi si l'appareil de préparation culinaire A est disposé au bord d'une table et que son fonctionnement engendre un déplacement à cause d'un balourd dû à l'entraineur rotatif 9, l'entité de commande C est agencée pour stopper la rotation de l'entraineur rotatif 9.

L'interface utilisateur U peut également comprendre un dispositif d'acquisition sonore permettant une saisie vocale d'une commande utilisateur.

L'interface utilisateur U comprend en outre un dispositif d'avertissement DA. Comme illustré à la figure 4, le dispositif d'avertissement DA comprend par exemple un écran d'affichage aff, un dispositif d'avertissement sonore so et/ou un voyant lumineux lum qui peut être disposé sous un bouton b.

L'appareil de préparation culinaire A est agencé pour être commandé par un utilisateur pour l'élaboration de recettes de cuisine. L'utilisateur est aidé par l'entité de commande C qui dispose d'une mémoire dans laquelle est enregistrée un ensemble de recettes de cuisine. L'interface utilisateur U permet en ce sens d'assister l'utilisateur dans la réalisation d'une recette. L'utilisateur peut déclencher des tâches T destinées à être accomplies par les éléments fonctionnels F suivant le cours de la recette.

L'entité de commande C en combinaison avec l'interface utilisateur U offre ainsi à l'utilisateur une assistance dans l'élaboration d'une recette de cuisine.

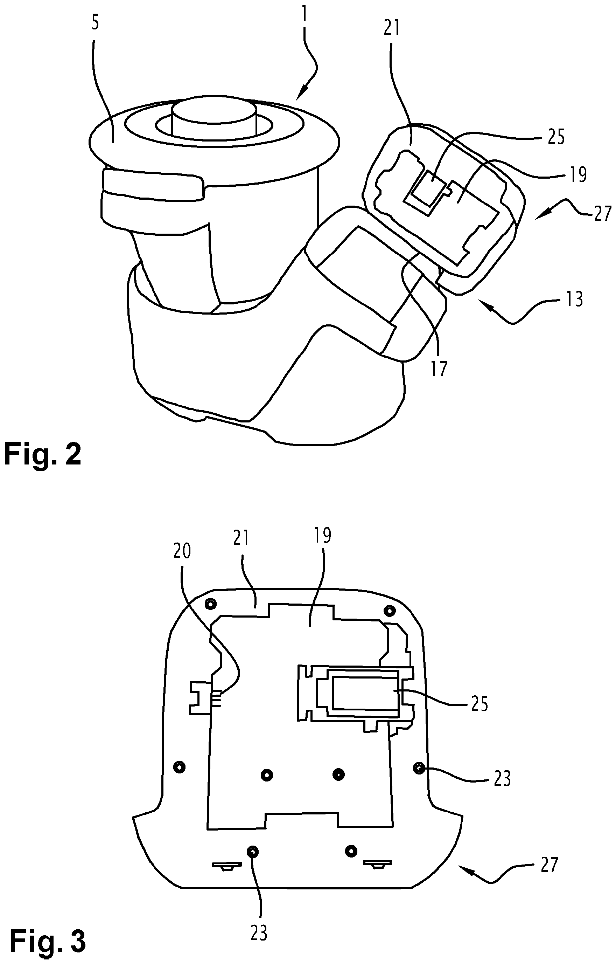

Comme illustré aux figures 2 à 4, le boitier 13 comprend une charnière 17 agencée pour permettre l'ouverture du boitier 13. L'entité de commande C comprend un circuit de puissance 18 et un circuit de commande 19.

Le circuit de puissance 18 est interne à l'appareil de préparation culinaire A. En outre, L'entité de commande C comprend un interrupteur int agencé pour alimenter le circuit de puissance en courant électrique en une position fermée.

L'entité de commande C comprend en outre deux sondes son1 et son2 de mesure de la température interne du récipient de cuissons, chacune étant agencé pour commander l'arrêt de l'alimentation électrique lorsqu'un seuil de température précis est atteint.

Un premier seuil de température correspondant à la sonde son1 est par exemple la température interne limite la plus élevée à ne pas dépasser lors du fonctionnement de l'appareil A lors d'une préparation culinaire. Un second seuil correspondant à la sonde son2 est par exemple la température limite lors de la marche à vide de l'appareil A.

L'entité de commande C comprend en outre une sonde son-v de mesure de la vitesse de rotation de l'élément rotatif 9, le circuit de puissance étant agencé pour couper l'alimentation électrique lorsque la vitesse mesurée est en dehors d'une plage déterminée.

Le circuit de commande 19 comprend une prise 20 pour être raccordé de manière amovible au circuit de puissance.

Comme illustré à la figure 3, le boitier 13 comprend un support 21 pourvu de fixations 23 telles que des vis. Le support 21 peut ainsi être solidarisé au reste du boitier 13. Le support 21 est également démontable. Le démontage est réalisé lorsque le boitier 13 est ouvert comme à la figure 2.

L'entité de commande C comprend en outre un circuit de communication 25 raccordé au circuit de commande 19 et agencé pour communiquer selon un protocole de communication connu, par exemple un protocole de communication bidirectionnel par ondes radio.

Le panneau de commande 15, le circuit de commande 19 et le circuit de communication 25 sont rapportés sur le support 21. Cet ensemble d'interface et de commande 27 représenté à la figure 3 et comprenant les éléments 15, 16, 19 ,25 et 21, est ainsi démontable par rapport au reste de l'appareil de préparation culinaire A. Le démontage est symbolisé par un trait à la figure 4.

Comme illustré à la figure 6, un procédé de remplacement d'un ensemble d'interface et de commande 27 d'un appareil de préparation culinaire A comprend les étapes suivantes :
- ETR retirer un premier ensemble d'interface et de commande d'un bâti de l'appareil de préparation culinaire A,
- ETM monter un deuxième ensemble d'interface et de commande 27 dans ledit bâti de l'appareil de préparation culinaire A.

Cette disposition est utile lorsque le premier ensemble d'interface et de commande est dépourvu de circuit de communication 25.

Un appareil de préparation culinaire A comprenant ce premier ensemble d'interface et de commande est par exemple un appareil A de conception plus ancienne étant dépourvu de la fonction de communication.

Au contraire le deuxième ensemble d'interface 27 comprend un circuit de communication 25 tel que décrit précédemment. Il est donc possible de faire évoluer un appareil de préparation culinaire A dépourvu de fonction de communication tout en conservant la partie mécanique, c'est-à-dire l'ensemble de l'appareil A à l'exception de l'ensemble d'interface et de commande 27.

L'appareil A dont l'ensemble d'interface et de commande 27 a été remplacé présente donc des possibilités supplémentaires pour l'utilisateur comme rendre possible le téléchargement et/ou l'exécution de recettes à partir d'un terminal Te. Ces recettes correspondent à une suite d'instructions pour les éléments fonctionnels F.

D'un point de vue pratique, l'étape ETR de retrait du premier ensemble d'interface et de commande du bâti de l'appareil de préparation culinaire A correspond à une étape de détachement des fixations 23 au bâti de l'appareil de préparation culinaire A et l'étape de montage du deuxième ensemble d'interface et de commande 27 à une étape de mise en place de fixations 23 au bâti de l'appareil de préparation culinaire A.

Concernant l'ensemble d'interface et de commande 27 comprenant un circuit de communication 25, l'entité de commande C est agencée pour envoyer et recevoir des informations selon le protocole de communication connu grâce au circuit de communication 25.

Il est ainsi possible pour l'appareil de préparation culinaire A d'échanger des informations avec un terminal Te distant.

Comme illustré à la figure 1, un tel terminal Te est également agencé pour communiquer selon le protocole de communication avec l'appareil de préparation culinaire A et ainsi commander à distance l'appareil de préparation culinaire A comme détaillé ci-dessous.

La commande de l'appareil de préparation culinaire met en jeu un procédé de commande interne de l'appareil de préparation culinaire A réalisé par ledit appareil A et un procédé de commande réalisé par le terminal Te.

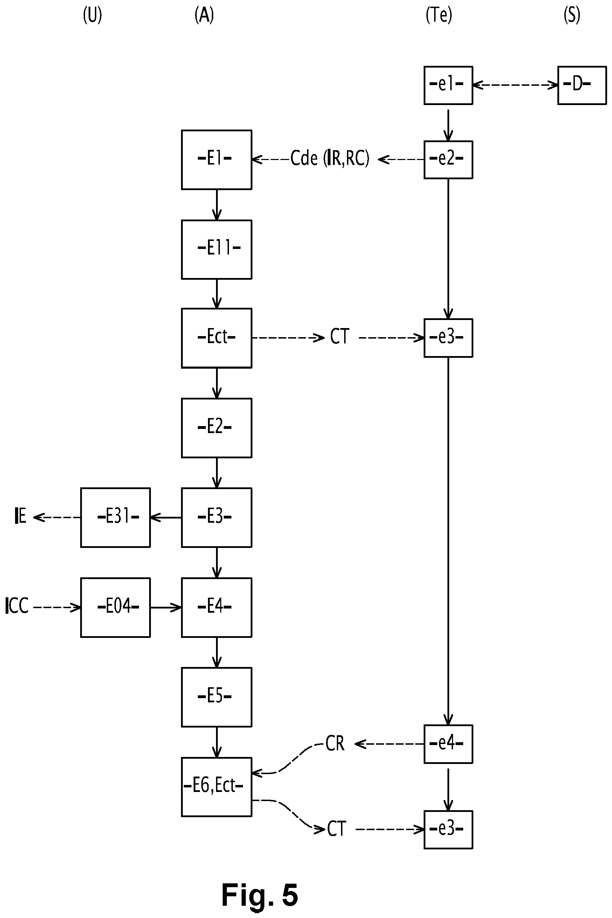

Comme illustré à la figure 5, le procédé de commande de l'appareil de préparation culinaire A par le terminal Te comprend une étape e1 de sélection d'une tâche déterminée T destinée à être accomplie par de l'appareil de préparation culinaire A.

Cette sélection est effectuée en utilisant une application exécutable installée sur le terminal Te. La tâche T déterminée peut correspondre à une étape d'une recette de cuisine.

Ainsi l'application permet à l'utilisateur de choisir une recette de cuisine, la sélection de chaque tâche T déterminée étant ensuite automatisée par l'application pour l'exécution complète de la recette.

L'utilisateur peut également avoir accès à une base de données D située dans un serveur S distant par exemple accessible par Internet. Le terminal Te est ainsi agencé pour communiquer avec le système de gestion de la base de données D et télécharger des données correspondant à des tâches T particulières ou des recettes particulières.

Le procédé de commande de l'appareil de préparation culinaire A par le terminal Te comprend une étape e2 consistant en l'envoi d'une information de commande Cde à destination de l'appareil de préparation culinaire A.

L'information de commande Cde comprend une instruction de commande IC relative à ladite tâche T à exécuter. L'information de commande Cde peut également comprendre une requête de contrôle RC.

La requête de contrôle RC a pour but d'obtenir un retour, c'est-à-dire une information de contrôle CT en provenance de l'appareil de préparation culinaire A.

L'information de contrôle CT peut correspondre à l'avancement de l'exécution de la tâche T déterminée ou à une anomalie de fonctionnement de l'appareil de préparation culinaire A qui a été détectée par un capteur dudit appareil. C'est le cas par exemple quand le couvercle de fermeture 5 est ouvert durant une tâche.

L'information de contrôle CT peut également signaler le bon fonctionnement de l'appareil de préparation culinaire.

Le procédé de commande interne de appareil de préparation culinaire A comprend ensuite une étape E1 de réception de l'information de commande Cde.

L'appareil de préparation culinaire réalise ensuite une étape de configuration E11 consistant à vérifier l'aptitude du ou des éléments fonctionnels F concernés par l'exécution de la tâche T déterminée.

Cette étape de configuration E11 consiste en outre à agencer le ou les éléments fonctionnels F concernés pour qu'ils soient disposés dans la configuration permettant d'exécuter la tâche T déterminée.

Cette étape d'agencement et de vérification est nécessaire du point de vue de la sécurité d'utilisation de l'appareil de préparation culinaire A.

A la figure 5, on a représenté une étape Ect d'émission d'une information de contrôle CT par l'entité de commande C correspondant à une requête de contrôle RC émise par le terminal Te.

Cette étape suit l'étape E11 dans le mode de réalisation présenté mais elle peut être réalisée à tout moment du fonctionnement de l'appareil de préparation culinaire A indépendamment de l'exécution d'une tâche T.

Cette étape Ect d'émission d'une information de contrôle CT peut être réalisée suite à la réception d'une requête de contrôle CT ou à l'initiative de l'appareil de préparation culinaire A, c'est-à-dire suite à un évènement particulier ou de manière régulière.

Le terminal Te procède ensuite à une étape e3 de réception de cette information de contrôle CT. L'application de gestion de l'exécution de la tâche est mise à jour grâce à cette information de contrôle CT.

Dans ce cas précis, l'information de contrôle CT peut comprendre un message du type : « l'appareil de préparation culinaire A a bien reçu l'information de commande Cde et est prêt à exécuter la tâche T correspondante ».

L'appareil de préparation culinaire A réalise ensuite une étape E2 de génération d'une information d'état IE. Cette information d'état IE est relative à l'aptitude du ou des éléments fonctionnels F déterminés à exécuter ladite instruction de commande IC précédemment reçue.

L'information d'état IE est ainsi à considérer comme une information simple pouvant avoir comme signification « oui, l'appareil de préparation culinaire A est prêt à exécuter la tâche T » ou « non, l'appareil n'est pas en un agencement lui permettant d'exécuter la tâche T ».

Cette information d'état IE est générée par l'entité de commande C puis dans une étape E3 transmise au dispositif d'avertissement DA qui dans une étape E31 émet un signal S relatif à ladite information d'état IE.

Cette information est émise lorsque le statut de l'information d'état IE est « oui, l'appareil de préparation culinaire est prêt à exécuter la tâche T ».

L'utilisateur doit être à proximité de l'appareil de préparation culinaire A pour percevoir le signal. Ainsi du point de vue de l'utilisateur, après avoir lancé l'exécution d'une tâche sur le terminal Te, il doit se rapprocher de l'appareil de préparation culinaire pour percevoir le signal S.

Ainsi l'utilisateur est apte à constater que tout est conforme à une bonne utilisation de l'appareil de préparation culinaire A et que l'agencement aux alentours de l'appareil A est optimal pour que la tâche T qui va être lancée se déroule dans de bonnes conditions.

C'est le cas par exemple, si, avant une tâche T de cuisson, aucun élément craignant la chaleur n'est à proximité immédiate de l'appareil A ou aucun enfant ne joue à proximité de l'appareil A.

L'utilisateur procède ensuite à la saisie d'une instruction confirmative de commande ICC au niveau de l'interface utilisateur U de l'appareil de préparation culinaire A.

Cette information confirmative de commande ICC est une simple validation qui ne nécessite pas de technicité spécifique. En effet, tous les paramètres de réglage relatifs à la tâche T à exécuter ont déjà été déterminés lors des étapes précédentes. Il ne s'agit donc pas d'un réglage.

L'information confirmative de commande ICC consiste par exemple en un appui sur un bouton qui peut également comprendre un élément lumineux du dispositif d'avertissement DA.

Ainsi la validation est très simple du point de vue de l'utilisateur : il voit un bouton s'allumer, ce qui lui signale que l'appareil de préparation culinaire A est prêt à l'exécution d'une tâche T, puis il appui sur ce bouton pour lancer l'exécution de la tâche T.

Cette saisie induit donc d'une étape E04 d'acquisition de l'instruction confirmative de commande ICC par l'interface utilisateur U qui est suivie par une étape E4 de réception d'une instruction confirmative de commande ICC par l'entité de commande C.

L'entité de commande C procède ensuite à étape E5 de déclenchement de l'exécution d'une tâche T déterminée correspondant à l'instruction de commande IC.

La tâche T déterminée est ensuite exécutée par le ou les éléments fonctionnels F concernés dans une étape E6. On a également représenté à la figure 5, l'envoi par le terminal T d'une requête de contrôle RC dans une étape e4. Le terminal reçoit ensuite une information de contrôle CT comme expliqué avant dans une étape e3.

Lors de l'étape E6, l'entité de contrôle C gère l'exécution de la tâche T. Ainsi le bon déroulement de l'étape est géré localement, ce qui évite toute interruption impromptue en cas de coupure de communication entre le terminal T et l'appareil de préparation culinaire A.

Le présent procédé offre donc les avantages d'une déportation d'une partie de la mémoire de l'entité de commande C, car les paramètres définissant les tâches T ne sont pas obligées d'être stockées localement.

Ainsi lorsque de nouvelles recettes comprenant un ensemble de tâches T ou lorsque de nouveaux éléments fonctionnels T peuvent être adaptés à l'appareil de préparation culinaire A, il n'est pas nécessaire de changer l'entité de commande C

De plus, cette déportation n'est que partielle car, lors du fonctionnement, à partir du moment où l'instruction de commande IC est parvenue à l'entité de commande C, l'appareil de préparation culinaire A gère seul l'exécution de la tâche T.

De plus, pour une sécurité améliorée, la présence d'un utilisateur à proximité de l'appareil A est nécessaire pour le déclenchement d'une tâche T, ce qui évite les démarrages intempestifs dus à une commande à distance.

Comme il va de soi, l'invention ne se limite pas à la seule forme d'exécution de ce procédé de commande, ce terminal et cet appareil de préparation culinaire, décrits ci-dessus à titre d'exemple, mais elle en embrasse d'autres variantes comprises dans la portée des revendications.

## Revendications

1. Ensemble d'interface et de commande (27) pour appareil de préparation culinaire (A) comprenant :
- un circuit de commande (19) comprenant une prise (20) adaptée pour être branchée à un circuit de puissance (18) de l'appareil de préparation culinaire (A) ou à un élément de liaison audit circuit de puissance (18), le circuit de commande (19) étant agencé pour émettre un signal de commande d'au moins un élément fonctionnel (F) de l'appareil de préparation culinaire (A),
- un circuit de communication (25) agencé pour échanger des informations avec un terminal distantselon un protocole de communication connu, par exemple un protocole de communication bidirectionnel par ondes radio, le circuit de communication (25) étant en outre apte à échanger des informations avec le circuit de commande (19),
- un support (21) sur lequel sont rapportés ou dans lequel sont ménagés le circuit de commande (19) et le circuit de communication (25), le support (21) comprenant des fixations (23) à un bâti de l'appareil de préparation culinaire (A), les fixations (23) étant aptes à solidariser le support (21) au bâti, les fixations (23), telles que des vis, étant démontables par rapport au bâti.

2. Ensemble d'interface et de commande (27) selon la revendication 1, comprenant en outre un panneau de commande (15) rapporté sur ou ménagé dans le support (21), le panneau de commande (15) étant agencé pour échanger des informations avec le circuit de commande (19).

3. Ensemble d'interface et de commande (27) selon la revendication 2, dans lequel le panneau de commande (15) comprend une interface utilisateur (U).

4. Ensemble d'interface et de commande (27) selon la revendication précédente, dans lequel l'interface utilisateur (U) comprend un ensemble de boutons (b), un détecteur de mouvement (prox) et/ou un dispositif d'acquisition sonore.

5. Ensemble d'interface et de commande (27) selon l'une des revendications 3 ou 4, dans lequel l'interface utilisateur (U) comprend un dispositif d'avertissement (DA).

6. Ensemble d'interface et de commande (27) selon la revendication précédente, dans lequel le dispositif d'avertissement (DA) comprend un écran d'affichage (aff), un dispositif d'avertissement sonore (so) et/ou un voyant lumineux (lum).

7. Ensemble d'interface et de commande (27) selon l'une des revendications précédentes, comprenant en outre un accéléromètre (16) rapporté sur ou ménagé dans le support (21).

8. Appareil de préparation culinaire (A) comprenant un ensemble d'interface et de commande (27) selon l'une des revendications précédentes.

9. Procédé de remplacement d'un ensemble d'interface et de commande (27) d'un appareil de préparation culinaire (A) comprenant les étapes suivantes :
- (ETR) retirer un premier ensemble d'interface et de commande d'un bâti de l'appareil de préparation culinaire (A),
ledit premier ensemble d'interface et de commande comprenant un circuit de commande (19) pourvu d'une prise (20) adaptée pour être branchée à un circuit de puissance (18) de l'appareil de préparation culinaire (A) ou à un élément de liaison audit circuit de puissance (18), le circuit de commande (19) étant agencé pour émettre un signal de commande d'au moins un élément fonctionnel (F) de l'appareil de préparation culinaire (A),
ledit premier ensemble d'interface et de commande comprenant en outre un support (21) sur lequel sont rapportés ou dans lequel est ménagé le circuit de commande (19), le support (21) comprenant des fixations (23) à un bâti de l'appareil de préparation culinaire (A),
ledit premier ensemble d'interface et de commande étant dépourvu de circuit de communication (25),
- (ETM) monter un deuxième ensemble d'interface et de commande (27) selon l'une des revendications 1 à 8 dans ledit bâti de l'appareil de préparation culinaire (A),
ledit deuxième ensemble d'interface et de commande (27) comprenant un circuit de commande (19), un support (21) et un circuit de communication (25) agencé pour échanger des informations avec un terminal (Te) distant selon un protocole de communication connu, par exemple un protocole de communication bidirectionnel par ondes radio, le circuit de communication (25) étant en outre apte à échanger des informations avec le circuit de commande (19).

10. Procédé de remplacement d'un ensemble d'interface et de commande (27) d'un appareil de préparation culinaire (A) selon la revendication 9, dans lequel l'étape de retrait du premier ensemble d'interface et de commande du bâti de l'appareil de préparation culinaire (A) correspond à une étape de détachement des fixations (23) au bâti de l'appareil de préparation culinaire (A), et/ou
dans lequel l'étape de montage du deuxième ensemble d'interface et de commande (27) correspond à une étape de mise en place de fixations (23) au bâti de l'appareil de préparation culinaire (A).

## Patentansprüche

1. Schnittstellen- und Steuereinheit (27) für eine Lebensmittelzubereitungseinrichtung (A), umfassend:
- eine Steuerschaltung (19), die einen Stecker (20) umfasst, der geeignet ist, an eine Leistungsschaltung (18) der Lebensmittelzubereitungseinrichtung (A) oder an ein Element zur Verbindung mit der Leistungsschaltung (18) angeschlossen zu werden, wobei die Steuerschaltung (19) dazu ausgelegt ist, ein Steuersignal für mindestens ein Funktionselement (F) der Lebensmittelzubereitungseinrichtung (A) auszugeben,
- eine Kommunikationsschaltung (25), die dazu ausgelegt ist, Informationen mit einem fernen Endgerät gemäß einem bekannten Kommunikationsprotokoll, zum Beispiel einem bidirektionalen Funkwellen-Kommunikationsprotokoll, auszutauschen, wobei die Kommunikationsschaltung (25) weiter in der Lage ist, Informationen mit der Steuerschaltung (19) auszutauschen,
- einen Träger (21), an dem die Steuerschaltung (19) und die Kommunikationsschaltung (25) angebracht sind oder in dem diese ausgebildet sind, wobei der Träger (21) Befestigungen (23) an einem Rahmen der Lebensmittelzubereitungseinrichtung (A) umfasst, wobei die Befestigungen (23) in der Lage sind, den Träger (21) fest mit dem Rahmen zu verbinden, wobei die Befestigungen (23), wie etwa Schrauben, in Bezug auf den Rahmen abbaubar sind.

2. Schnittstellen- und Steuereinheit (27) nach Anspruch 1, die weiter ein Bedienfeld (15) umfasst, das am Träger (21) angebracht oder in diesem ausgebildet ist, wobei das Bedienfeld (15) dazu ausgelegt ist, Informationen mit der Steuerschaltung (19) auszutauschen.

3. Schnittstellen- und Steuereinheit (27) nach Anspruch 2, wobei das Bedienfeld (15) eine Benutzerschnittstelle (U) umfasst.

4. Schnittstellen- und Steuereinheit (27) nach dem vorstehenden Anspruch, wobei die Benutzerschnittstelle (U) eine Tasteneinheit (b), einen Bewegungssensor (prox) und/oder eine akustische Erfassungsvorrichtung umfasst.

5. Schnittstellen- und Steuereinheit (27) nach einem der Ansprüche 3 oder 4, wobei die Benutzerschnittstelle (U) eine Warnvorrichtung (DA) umfasst.

6. Schnittstellen- und Steuereinheit (27) nach dem vorstehenden Anspruch, wobei die Warnvorrichtung (DA) einen Anzeigebildschirm (aff), eine akustische Warnvorrichtung (so) und/oder eine Kontrollleuchte (lum) umfasst.

7. Schnittstellen- und Steuereinheit (27) nach einem der vorstehenden Ansprüche, die weiter einen Beschleunigungsmesser (16) umfasst, der am Träger (21) angebracht oder in diesem ausgebildet ist.

8. Lebensmittelzubereitungseinrichtung (A), die eine Schnittstellen- und Steuereinheit (27) nach einem der vorstehenden Ansprüche umfasst.

9. Verfahren zum Auswechseln einer Schnittstellen- und Steuereinheit (27) einer Lebensmittelzubereitungseinrichtung (A), das die folgenden Schritte umfasst:
- (ETR) Entfernen einer ersten Schnittstellen- und Steuereinheit von einem Rahmen der Lebensmittelzubereitungseinrichtung (A),
wobei die erste Schnittstellen- und Steuereinheit eine Steuerschaltung (19) umfasst, die mit einem Stecker (20) versehen ist, der geeignet ist, an eine Leistungsschaltung (18) der Lebensmittelzubereitungseinrichtung (A) oder an ein Element zur Verbindung mit der Leistungsschaltung (18) angeschlossen zu werden, wobei die Steuerschaltung (19) dazu ausgelegt ist, ein Steuersignal für mindestens ein Funktionselement (F) der Lebensmittelzubereitungseinrichtung (A) auszugeben,
wobei die erste Schnittstellen- und Steuereinheit weiter einen Träger (21) umfasst, an dem die Steuerschaltung (19) angebracht ist oder in dem diese ausgebildet ist, wobei der Träger (21) Befestigungen (23) an einem Rahmen der Lebensmittelzubereitungseinrichtung (A) umfasst,
wobei die erste Schnittstellen- und Steuereinheit keine Kommunikationsschaltung (25) aufweist,
- (ETM) Montieren einer zweiten Schnittstellen- und Steuereinheit (27) nach einem der Ansprüche 1 bis 8 im Rahmen der Lebensmittelzubereitungseinrichtung (A),
wobei die zweite Schnittstellen- und Steuereinheit (27) eine Steuerschaltung (19), einen Träger (21) und eine Kommunikationsschaltung (25) umfasst, die dazu ausgelegt ist, Informationen mit einem fernen Endgerät (Te) gemäß einem bekannten Kommunikationsprotokoll, zum Beispiel einem bidirektionalen Funkwellen-Kommunikationsprotokoll, auszutauschen, wobei die Kommunikationsschaltung (25) weiter in der Lage ist, Informationen mit der Steuerschaltung (19) auszutauschen.

10. Verfahren zum Auswechseln einer Schnittstellen- und Steuereinheit (27) einer Lebensmittelzubereitungseinrichtung (A) nach Anspruch 9, wobei der Schritt des Entfernens der ersten Schnittstellen- und Steuereinheit vom Rahmen der Lebensmittelzubereitungseinrichtung (A) einem Schritt des Lösens der Befestigungen (23) am Rahmen der Lebensmittelzubereitungseinrichtung (A) entspricht, und/oder
wobei der Schritt des Montierens der zweiten Schnittstellen- und Steuereinheit (27) einem Schritt des Anbringens von Befestigungen (23) am Rahmen der Lebensmittelzubereitungseinrichtung (A) entspricht.

## Claims

1. An interface and control assembly (27) for culinary preparation appliance (A) comprising:
- a control circuit (19) comprising a socket (20) adapted to be connected to a power circuit (18) of the culinary preparation appliance (A) or to a connecting element to said power circuit (18), the control circuit (19) being arranged to emit a control signal for at least one functional element (F) of the culinary preparation appliance (A),
- a communication circuit (25) arranged to exchange information with a remote terminal according to a known communication protocol, for example a bidirectional communication protocol by radio waves, the communication circuit (25) further being able to exchange information with the control circuit (19),
- a support (21) on which are attached or in which are provided the control circuit (19) and the communication circuit (25), the support (21) comprising fasteners (23) to a frame of the culinary preparation appliance (A), the fasteners (23) being able to secure the support (21) to the frame, the fasteners (23), such as screws, being removable relative to the frame.

2. The interface and control assembly (27) according to claim 1, further comprising a control panel (15) attached to or provided in the support (21), the control panel (15) being arranged to exchange information with the control circuit (19).

3. The interface and control assembly (27) according to claim 2, wherein the control panel (15) comprises a user interface (U).

4. The interface and control assembly (27) according to the preceding claim, wherein the user interface (U) comprises a set of buttons (b), a motion detector (prox) and/or a sound acquisition device.

5. The interface and control assembly (27) according to any of claims 3 or 4, wherein the user interface (U) comprises a warning device (DA).

6. The interface and control assembly (27) according to the preceding claim, wherein the warning device (DA) comprises a display screen (aff), an audible warning device (so) and/or an indicator light (lum).

7. The interface and control assembly (27) according to any of the preceding claims, further comprising an accelerometer (16) attached to or provided in the support (21).

8. A culinary preparation appliance (A) comprising an interface and control assembly (27) according to any of the preceding claims.

9. A method for replacing an interface and control assembly (27) of a culinary preparation appliance (A) comprising the following steps:
- (ETR) removing a first interface and control assembly from a frame of the culinary preparation appliance (A),
said first interface and control assembly comprising a control circuit (19) provided with a socket (20) adapted to be connected to a power circuit (18) of the culinary preparation appliance (A) or to a connecting element to said power circuit (18), the control circuit (19) being arranged to emit a control signal for at least one functional element (F) of the culinary preparation appliance (A),
said first interface and control assembly further comprising a support (21) on which are attached or in which is provided the control circuit (19), the support (21) comprising fasteners (23) to a frame of the culinary preparation appliance (A),
said first interface and control assembly being devoid of communication circuit (25),
- (ETM) mounting a second interface and control assembly (27) according to any of claims 1 to 8 in said frame of the culinary preparation appliance (A),
said second interface and control assembly (27) comprising a control circuit (19), a support (21) and a communication circuit (25) arranged to exchange information with a remote terminal (Te) according to a known communication protocol, for example a bidirectional communication protocol by radio waves, the communication circuit (25) also being capable of exchanging information with the control circuit (19).

10. The method for replacing an interface and control assembly (27) of a culinary preparation appliance (A) according to claim 9, wherein the step of removing the first interface and control assembly from the frame of the culinary preparation appliance (A) corresponds to a step of detaching the fasteners (23) from the frame of the culinary preparation appliance (A), and/or
in which the step of mounting the second interface and control assembly (27) corresponds to a step of installing fasteners (23) to the frame of the culinary preparation appliance (A).
